# FASCICULE DE BREVET EUROPEEN

(11) **EP 2 077 088 B1**
(45) Date de publication et mention de la délivrance du brevet: **24.08.2011**
(21) Numéro de dépôt: 08173115.0
(22) Date de dépôt: 30.12.2008
(51) Int. Cl.: A47J 45/06, A47J 36/06

(54) **Bouton de préhension de couvercle d'article culinaire**
Griffknopf am Deckel eines Küchengeräts
Button for gripping the lid of a culinary item

(30) Priorité: 07.01.2008 FR 0850070
(43) Date de publication de la demande: 08.07.2009
(73) Titulaire: Seb S.A., 69130 Ecully (FR)
(72) Inventeur: Plichon, Stéphane, 74350, Allonzier la Caille (FR)
(74) Mandataire: Somnier, Jean-Louis

(56) Documents cités:
- EP-A- 1 177 754
- DE-U1- 20 218 603
- DE-U1- 29 717 621
- US-B1- 6 202 875

## Description

La présente invention concerne un bouton de préhension de couvercle d'article culinaire, tel qu'un couvercle de casserole, de sauteuse...

On connaît un bouton de préhension du type comprenant d'une part, un socle adapté à être fixé à un capot de couvercle pour article culinaire et à délimiter, avec le capot, un canal d'évacuation de vapeur, et, d'autre part, un organe de préhension monté rotatif, selon un axe de rotation, autour du socle, dans une plage angulaire de régulation de vapeur délimitée par deux positions angulaires extrêmes de régulation, de façon à pouvoir obstruer l'ouverture de sortie du canal d'évacuation en fonction de sa position angulaire dans cette plage.

Un tel bouton, par exemple divulgué dans le modèle d'utilité allemand DE 297 17 621, est relativement complexe à trois éléments, à savoir le socle, un organe de préhension rotatif autour du socle en forme de couronne, et un organe de préhension fixe supérieur surmontant les deux autres éléments. De plus, ce bouton ne peut exister assemblé que fixé au capot. En effet, les moyens de fixation permettant sa fixation au capot ne coopèrent avec le bouton que par l'organe de préhension supérieur, les deux autres éléments étant solidarisés au capot du fait qu'ils sont pris en étau entre ce dernier et l'organe supérieur de préhension.

La présente invention vise à réaliser un bouton pouvant être assemblé sans devoir être solidarisé à un capot, et ceci tout en n'ayant que deux éléments constitutifs.

Selon l'invention, dans le bouton de préhension du type précité, le socle et l'organe de préhension comprennent des moyens de fixation conjugués permettant leur fixation l'un à l'autre par leur rapprochement relatif axial.

De ce fait, le bouton peut être assemblé indépendamment de la présence d'un capot. Cet assemblage indépendant est particulièrement intéressant pour la gestion des stocks, étant donné qu'une fois assemblé, le bouton peut être stocké et affecté ultérieurement pour la réalisation de tout couvercle d'une série commerciale (couvercles ayant des dimensions différentes mais ayant un même caractère esthétique).

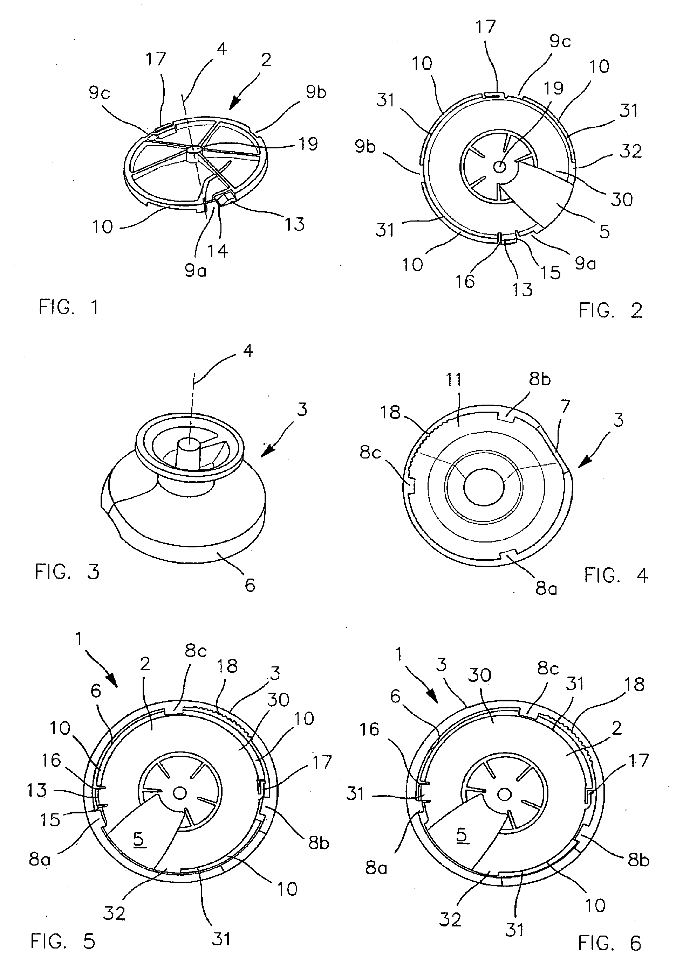

D'autres particularités et avantages apparaîtront dans la description de deux modes de réalisation d'un bouton conforme à la présente invention donnés à titre d'exemples non limitatifs et illustrés par les dessins annexés dans lesquels
La figure 1 est un socle conforme à un premier mode de réalisation de la présente invention, vu en perspective de dessus et de côté,
La figure 2 représente le socle de la figure 1 vu de dessous (vu du capot),
La figure 3 représente un organe de préhension conforme au premier mode de réalisation, vu en perspective de dessus et de côté,
La figure 4 représente l'organe de préhension de la figure 3 vu de dessous (vu du capot),
La figure 5 représente le bouton formé par le socle de la figure 1 et l'organe de préhension de la figure 3, vu de dessous, l'organe de préhension et le socle étant dans leur position angulaire relative initiale,
La figure 6 est une vue similaire à la figure 5, l'organe de préhension et le socle étant dans une position angulaire de franchissement d'un point dur de verrouillage de leur solidarisation,

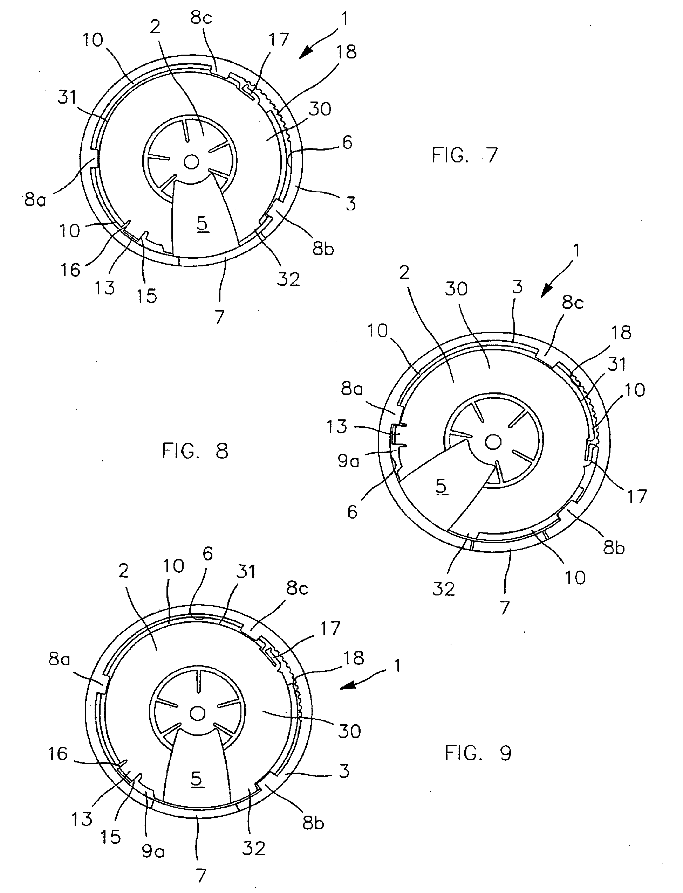

La figure 7 est une vue similaire aux figures 5 et 6, l'organe de préhension et le socle étant dans une position angulaire de régulation de vapeur dans la plage angulaire de régulation de vapeur,
La figure 8 est une vue similaire aux figures 5 à 7, l'organe de préhension étant dans la position angulaire de débit minimum,
La figure 9 est une vue similaire aux figures 5 à 8, l'organe de préhension étant dans la position angulaire de débit maximum, et

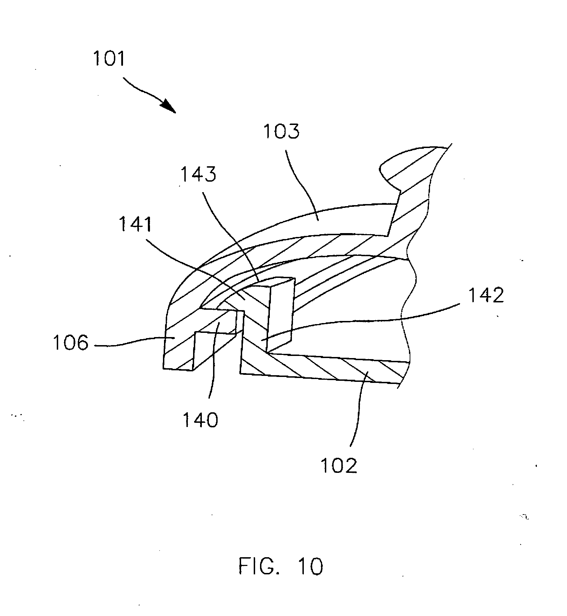

La figure 10 est une vue en coupe axiale d'un bouton conforme à un second mode de réalisation de la présente invention.

Le bouton de préhension 1, 101 pour un couvercle d'article culinaire conforme à la présente invention comprend d'une part, un socle 2, 102 qui est adapté à être fixé à un capot de façon à former le couvercle, et, d'autre part, un organe de préhension 3, 103 permettant de saisir et de manipuler le couvercle.

Le socle 2, 102 permet de délimiter, avec le capot auquel il est fixé, un canal d'évacuation de vapeur. L'organe de préhension 3, 103 est monté rotatif, selon un axe de rotation 4, autour du socle 2, 102, et ceci dans une plage angulaire de régulation de vapeur qui est délimitée par deux positions angulaires extrêmes de régulation. De cette façon, l'organe de préhension 3, 103 qui, du fait de sa fonction première, est aisément préhensible, permet d'obstruer la sortie du canal d'évacuation en fonction de sa position angulaire dans cette plage de régulation.

En l'occurrence, le socle 2, 102 a la forme générale d'un disque qui comprend un secteur angulaire bombé vers le haut 5 (à l'opposé du capot) qui délimite le canal d'évacuation de vapeur. L'organe de préhension 3, 103 recouvre et ceinture le socle 2, 102. Il comprend, à sa partie inférieure, une paroi périphérique 6, 106 (de forme cylindrique) qui ceinture le socle 2, 102 et obstrue la sortie du canal d'évacuation. Cette paroi périphérique 6, 106 comporte un orifice d'évacuation 7 qui s'étend sur un secteur angulaire correspondant au secteur angulaire bombé 5 du socle 2, 102 et qui permet de libérer la sortie de la vapeur en fonction de sa position angulaire par rapport au canal d'évacuation.

L'avantage d'un tel agencement est qu'il est possible de réaliser le socle 2, 102 dans une matière plastique en grade alimentaire, par exemple en polyamide, l'organe de préhension 3, 103 dont la forme peut être complexe pour des raisons d'ergonomie ou d'esthétisme, étant en résine phénolique. En effet, les condensats de vapeur se formant sur l'organe de préhension 3, 103 retombent sur le capot sont facilement dirigés à la périphérie de ce dernier, contrairement à ceux se formant dans le canal qui ont tendance à s'écouler dans la préparation culinaire contenue dans l'article culinaire recouvert par le couvercle via la lumière réalisée dans le capot, au droit du secteur bombé 5 (et ceci, d'autant plus, que la condensation a lieu près de cette lumière).

Selon l'invention, le socle 2, 102 et l'organe de préhension 3, 103 comprennent des moyens de fixation conjugués permettant leur fixation l'un à l'autre par leur rapprochement relatif axial.

Dans le premier mode de réalisation, l'organe de préhension 3 est solidarisé au socle 2 par un système par baïonnette qui est porté par le socle 2 et l'organe de préhension 3. De façon plus précise, le système de solidarisation par baïonnette comprend au moins deux (ici, trois) ergots 8a, 8b, 8c périphériques portés par l'organe de préhension 3, et autant d'échancrures 9a, 9b, 9c réalisées dans le socle 2 permettant le coulissement axial de l'organe de préhension 3 par rapport au socle 2 entre une position axiale de mise en place définissant une position angulaire initiale, et une position axiale d'utilisation dans laquelle l'organe de préhension 3 peut passer de l'une à l'autre des deux positions angulaires extrêmes de régulation. De façon plus précise, les échancrures 9a, 9b, 9c sont réalisées dans un épaulement périphérique 10 qui forme la délimitation périphérique du socle 2, et les ergots 8a, 8b, 8c sont portés par la paroi périphérique 6 qui ceinture l'épaulement périphérique 10 du socle 2.

De façon à immobiliser l'axe de rotation 4, l'épaulement périphérique 10 ne s'étend axialement que sur une partie de l'épaisseur du corps 30 du socle 2, les extrémités libres des trois ergots 8a, 8b, 8c venant en butée contre la surface cylindrique périphérique 31 du corps 30, l'épaulement périphérique 10 formant une saillie radiale sur la portion supérieure de cette surface cylindrique périphérique 31.

De façon à immobiliser axialement l'organe de préhension 3 dans sa position axiale d'utilisation, la paroi périphérique 6 porte une paroi annulaire 11 qui est décalée axialement des ergots 8a, 8b, 8c, vers le haut (à l'opposé du capot), de l'épaisseur de l'épaulement périphérique 10 du socle 2 (au jeu nécessaire à la rotation près).

En outre, dans le présent mode de réalisation, afin d'éviter une désolidarisation accidentelle de l'organe de préhension 3 du reste du couvercle (capot et socle 2) en cours d'utilisation, le bouton de préhension 1 comprend un système de verrouillage de la solidarisation de l'organe de préhension 3 au socle 2. Ce système de verrouillage est porté par le socle 2 et l'organe de préhension 3 et il empêche, quand l'organe de préhension 3 est dans sa position axiale d'utilisation, le passage d'une position angulaire de régulation comprise dans la plage angulaire de régulation de vapeur à la position angulaire initiale dans laquelle les ergots 8a, 8b, 8c sont en face des échancrures 9a, 9b, 9c.

A cet effet, dans le présent mode de réalisation, le système de verrouillage est formé par un dispositif à point dur ne pouvant être franchi que dans le sens de rotation de la position angulaire initiale vers la plage angulaire de régulation de vapeur. De façon plus précise, le dispositif à point dur comprend un doigt 8a qui, dans le présent exemple, est formé par l'un des ergots 8a, 8b, 8c, et une languette 13 flexible axialement portée par le corps 30 du socle 2. La languette 13 comporte (ici, à sa face supérieure, à l'opposé du capot) un plan axialement incliné 14 qui permet au doigt 8a de la franchir par encliquetage. Elle comporte également deux faces radiales 15,16 qui la délimitent angulairement. La première face radiale 15 (du côté le moins épais) délimite l'échancrure 9a correspondante à cet ergot 8a agissant comme doigt 8a et elle s'étend axialement à un niveau plus bas que le doigt 8a de sorte que ce dernier la déplace axialement quand l'organe de préhension 3 est entraîné de sa position axiale initiale vers la page de régulation. La seconde face radiale 16 (du côté le plus épais), opposée à la première 15, s'étend axialement sur toute la hauteur de la surface cylindrique périphérique 31 du corps 30 de façon à permettre au doigt 8a d'y venir en butée et de définir l'une des deux positions angulaires extrêmes de régulation de vapeur.

L'autre position angulaire extrême est définie par la mise en butée d'un autre ergot 8b contre un organe de butée 32 qui est un prolongement axial vers le bas de l'épaulement annulaire 10 ou, autrement dit, un prolongement radial de la surface cylindrique périphérique 31 du corps 30 jusqu'à l'épaulement annulaire 10.

Enfin, dans le présent mode de réalisation, le bouton de préhension 1 comprend un système de régulation de débit de vapeur. Ce système permet d'immobiliser l'organe de préhension 3 dans les différentes positions angulaires de régulation dans la plage de régulation. De façon plus précise, le système de régulation est formé par une lamelle 17 flexible radialement portée par le socle 2, et par une série de crans 18 portée par l'organe de préhension 3 (en l'occurrence par la paroi périphérique 6) de façon à définir autant de positions angulaires de régulation. Afin d'être radialement flexible, la lamelle 17 est en forme de L, et s'étend de la surface cylindrique périphérique 31 du corps 30 par l'extrémité libre de sa petite branche radiale, l'encliquetage avec les crans 18 se faisant par l'extrémité libre de l'autre branche tangentielle.

Afin de permettre la fixation du bouton de préhension 1 au capot, il est nécessaire, dans le présent mode de réalisation, d'introduire préalablement à l'assemblage du bouton 1, la vis d'assemblage dans le taraudage central 19 réalisé dans le socle 2, la tête étant disposée entre le socle 2 et l'organe de préhension 3.

Dans le second mode de réalisation, l'organe de préhension 103 est solidarisé au socle 102 par un système par encliquetage qui est porté par le socle 102 et l'organe de préhension 103. De façon plus précise, le système par encliquetage comprend une paroi annulaire interne 140 portée par la paroi périphérique 106 de l'organe de préhension 103, et un ergot 141 porté par une patte 142 montée élastiquement sur le socle 102. L'élasticité de la patte 142 permet une fixation par encliquetage lors du coulissement axial de l'organe de préhension 103 par rapport au socle 102 entre une position axiale de mise en place dans laquelle un plan incliné supérieur 143 de l'ergot 141 est en butée contre la face inférieure de la paroi annulaire interne 140, et une position axiale d'utilisation dans laquelle l'ergot 141 a franchi la paroi annulaire 140 et dans laquelle l'organe de préhension 103 peut passer de l'une à l'autre des deux positions angulaires extrêmes de régulation.

Les positions angulaires extrêmes peuvent être définies par des butées disposées angulairement de façon judicieuse contre les quelles viennent en butée soit les pattes 142 et les ergots 143 (butées fixées à l'organe de préhension 103), soit la paroi annulaire interne 140 qui dans ce cas est réalisée de façon discontinue à la périphérie de l'organe de préhension 103 (butées fixées au socle 102).

Le bouton comprend par ailleurs un système de régulation de débit identique à celui du premier mode de réalisation.

La présente invention n'est pas limitée aux présents modes de réalisation.

Ainsi, pour le premier mode de réalisation :
- Il serait possible que le nombre d'ergots et d'échancrure soit différent de trois. Il serait également possible que les ergots soient portés par le socle, les échancrures étant alors réalisées dans une bordure périphérique portée l'organe de préhension.
- Il serait également possible que le doigt du dispositif à point dur ne soit pas formé par l'un des ergots, le doigt et la languette étant alors préférablement décalés axialement par rapport aux ergots et aux échancrures. Le doigt pouvant être porté aussi bien par le socle que par l'organe de préhension, la languette étant alors évidemment portée par l'autre élément constitutif du bouton.

Pour les deux modes de réalisation, il serait possible que la série de cran soit réalisée sur le socle, la lamelle flexible étant alors portée par l'organe de préhension.

## Revendications

1. Bouton de préhension (1, 101) comprenant, d'une part, un socle (2, 102) adapté à être fixé à un capot de couvercle pour article culinaire et à délimiter, avec le capot, un canal d'évacuation de vapeur, et, d'autre part, un organe de préhension (3, 103) monté rotatif, selon un axe de rotation (4), autour du socle (2, 102), dans une plage angulaire de régulation de vapeur délimitée par deux positions angulaires extrêmes de régulation, de façon à pouvoir obstruer la sortie du canal d'évacuation en fonction de sa position angulaire dans cette plage, **caractérisé en ce que** le socle (2, 102) et l'organe de préhension (3, 103) comprennent des moyens de fixation conjugués permettant leur fixation l'un à l'autre par leur rapprochement relatif axial.

2. Bouton de préhension (1, 101) selon la revendication 1, **caractérisé en ce que** le socle (2, 102) a la forme générale d'un disque comprenant un secteur angulaire bombé vers le haut (5) adapté à délimiter le canal d'évacuation de vapeur.

3. Bouton de préhension (1, 101) selon la revendication 2, **caractérisé en ce que** l'organe de préhension (3, 103) comprend une paroi périphérique (6, 106) ceinturant le socle (2, 102), adaptée à obstruer la sortie du canal d'évacuation, et comportant un orifice d'évacuation (7) s'étendant sur un secteur angulaire correspondant au secteur angulaire bombé (5) du socle (2, 102).

4. Bouton de préhension (1) selon l'une des revendications 1 à 3, caractérisé en ce l'organe de préhension (3) est solidarisé au socle (2) par un système par baïonnette porté par le socle (2) et l'organe de préhension (3).

5. Bouton de préhension (1) selon la revendication 4, **caractérisé en ce que** le système de solidarisation par baïonnette comprend au moins deux ergots (8a, 8b, 8c) portés par l'un (3) des deux éléments entre l'organe de préhension (3) et le socle (2), et autant d'échancrures (9a, 9b, 9c) réalisées dans un épaulement périphérique (10) porté par l'autre élément (2) permettant le coulissement axial de l'organe de préhension (3) par rapport au socle (2) entre une position axiale de mise en place définissant une position angulaire initiale, et une position axiale d'utilisation dans laquelle l'organe de préhension (3) est libre de passer de l'une à l'autre des deux positions angulaires extrêmes de régulation de vapeur.

6. Bouton de préhension (1) selon la revendication 5 dépendante de la revendication 3, **caractérisé en ce que** l'épaulement périphérique (10) forme la délimitation périphérique du socle (2), les ergots (8a, 8b, 8c) étant portés par la paroi périphérique (6) de l'organe de préhension (3) qui ceinture l'épaulement périphérique (10).

7. Bouton de préhension (1) selon la revendications 5 ou 6 dépendante de la revendication 3, **caractérisé en ce que** la paroi périphérique (6) porte une paroi annulaire (11) décalée axialement des ergots (8a, 8b, 8c) de l'épaisseur de l'épaulement périphérique (10) du socle (2), et contre laquelle cette dernière est en butée quand le socle (2) est dans sa position axiale d'utilisation.

8. Bouton de préhension (1) selon l'une des revendications 5 à 7, **caractérisé en ce que** le système de solidarisation par baïonnette comprend trois ergots (8a, 8b, 8c) et trois échancrures (9a, 9b, 9c).

9. Bouton de préhension (1) selon l'une des revendications 5 à 8, **caractérisé en ce qu'**il comprend un système de verrouillage de la solidarisation de l'organe de préhension au socle (2) porté par le socle (2) et l'organe de préhension (3), permettant, quand l'organe de préhension (3) est dans sa position axiale d'utilisation, sa rotation de sa position axiale initiale vers la plage angulaire de régulation, et empêchant le mouvement inverse.

10. Bouton de préhension (1) selon la revendication 9, **caractérisé en ce que** le système de verrouillage comprend, d'une part, un doigt (8a) porté par l'un (3) des deux éléments entre l'organe de préhension (3) et le socle (2), et, d'autre part, une languette (13) portée par l'autre élément (2) de façon axialement flexible, la languette (13) comportant un plan axialement incliné (14) qui permet au doigt (8a) de la franchir par encliquetage dans un sens de rotation et une face radiale (16) définissant l'une des deux positions angulaires extrêmes de régulation de vapeur quand le doigt (8a) y vient en butée dans l'autre sens de rotation.

11. Bouton de préhension (1) selon la revendication 10, **caractérisé en ce que** le doigt (8a) est formé par l'un des ergots (8a, 8b, 8c), l'échancrure (9a) correspondante étant délimitée par la face radiale (15) de la languette (13) opposée à celle (16) définissant l'une des positions angulaires extrêmes.

12. Bouton de préhension (101) selon l'une des revendications 1 à 3, caractérisé en ce l'organe de préhension (103) est solidarisé au socle (102) par un système par encliquetage porté par le socle (102) et l'organe de préhension (103).

13. Bouton de préhension (101) selon la revendication 12 dépendante de la revendication 3, caractérisé le système par encliquetage comprend une paroi annulaire interne (140) portée par la paroi périphérique (106), et un ergot (141) porté par une patte (142) montée élastiquement sur le socle (102).

14. Bouton de préhension (1, 101) selon l'une des revendications 1 à 13, **caractérisé en ce qu'**il comprend un système de régulation de débit de vapeur permettant d'immobiliser l'organe de préhension (3, 103) dans différentes positions angulaires de régulation dans la plage de régulation.

15. Bouton de préhension (1, 101) selon la revendication 14, **caractérisé en ce que** le système de régulation de débit de vapeur est formé par une lamelle (17) portée de façon radialement flexible par l'un (3, 103) des deux éléments entre l'organe de préhension (3, 103) et le socle (2, 102) et une série de crans (18) portée par l'autre élément (2, 102) de façon à définir autant de positions angulaires de régulation par encliquetage.

16. Bouton de préhension (1, 101) selon la revendication 15, **caractérisé en ce que** la lamelle (17) est portée par le socle (2, 102), les crans (18) étant réalisés dans l'organe de préhension (3).

17. Couvercle d'article culinaire comprenant un capot adapté à recouvrir l'article culinaire et un bouton de préhension (1, 101) fixé au capot, **caractérisé en ce que** le bouton de préhension (1, 101) est conforme à l'une des revendications 1 à 16.

## Claims

1. A gripping knob (1, 101) comprising a base (2, 102) adapted so as to be attached to a lid cover for a cooking vessel and to delimit with the cover a steam discharge channel on the one hand, and, a gripping member (3, 103) rotatably mounted along an axis of rotation (4) around the base (2, 102) on the other hand, in an angular steam control range delimited by two extreme angular control positions, so as to be able to block the outlet of the discharge channel depending on its angular position in this range, **characterized in that** the base (2, 102) and the gripping member (3, 103) comprise combined attachment means with which they can be attached to each other when they axially move closer relatively to each other.

2. The gripping knob (1, 101) according to claim 1, **characterized in that** the base (2, 102) has the general shape of a disc comprising an angular sector bulging upwards (5) adapted so as to delimit the steam discharge channel.

3. The gripping knob (1, 101) according to claim 2, **characterized in that** the gripping member (3, 103) comprises a peripheral wall (6, 106) encircling the base (2, 102) adapted so as to block the outlet of the discharge channel, and including a discharge orifice (7) extending over an angular sector corresponding to the bulging angular sector (5) of the base (2, 102).

4. The gripping knob (1) according to any of claims 1 to 3, **characterized in that** the gripping member (3) is firmly attached to the base (2) by a bayonet system borne by the base (2) and the gripping member (3).

5. The gripping knob (1) according to claim 4, **characterized in that** the firm attachment system by bayonet comprises at least two pins (8a, 8b, 8c) borne by one (3) of the two components between the gripping member (3) and the base (2), and as many notches (9a, 9b, 9c) made in a peripheral shoulder (10) borne by the other component (2) allowing the gripping member (3) to axially slide relatively to the base (2) between an axial placement position defining an initial angular position, and an axial position of use in which the gripping member (3) is free to pass from one to the other of the two extreme angular positions for steam control.

6. The gripping knob (1) according to claim 5 dependent on claim 3, **characterized in that** the peripheral shoulder (10) forms the peripheral delimitation of the base (2), the pins (8a, 8b, 8c) being borne by the peripheral wall (6) of the gripping member (3) which encircles the peripheral shoulder (10).

7. The gripping knob (1) according to claim 5 or 6 dependent on claim 3, **characterized in that** the peripheral wall (6) bears an annular wall (11) axially shifted from the pins (8a, 8b, 8c) by the thickness of the peripheral shoulder (10) of the base (2) and against which the latter is in abutment when the base (2) is in its axial position of use.

8. The gripping knob (1) according to any of claims 5 to 7, **characterized in that** the firm attachment system by bayonet comprises three pins (8a, 8b, 8c) and three notches (9a, 9b, 9c).

9. The gripping knob (1) according to any of claims 5 to 8, **characterized in that** it comprises a system for locking the firm attachment of the gripping member to the base (2), borne by the base (2) and the gripping member (3), allowing, when the gripping member (3) is in its axial position of use, its rotation from its initial axial position to the angular control range, and preventing the reverse movement.

10. The gripping knob (1) according to claim 9, **characterized in that** the locking system comprises a finger (8a) borne by one (3) of the two components between the gripping member (3) and the base (2) on the one hand, and on the other hand, a tongue (13) borne by the other component (2) in a axially flexible way, the tongue (13) including an axially tilted plane (14) which allows the finger (8a) to get over it by a detent action in a direction of rotation and a radial face (16) defining one of the two extreme angular steam control positions when the finger (8a) abuts thereon in the other direction of rotation.

11. The gripping knob (1) according to claim 10, **characterized in that** the finger (8a) is formed by one of the pins (8a, 8b, 8c), the corresponding notch (9a) being delimited by the radial face (15) of the tab (13) opposite to the one (16) defining one of the extreme angular positions.

12. The gripping knob (101) according to any of claims 1 to 3, **characterized in that** the gripping member (103) is firmly attached to the base (102) by a detent system borne by the base (102) and the gripping member (103).

13. The gripping knob (101) according to claim 12 dependent on claim 3, **characterized in that** the detent system comprises an internal angular wall (140) borne by the peripheral wall (106), and a pin (141) borne by a tab (142) elastically mounted on the base (102).

14. The gripping knob (1, 101) according to any of claims 1 to 13, **characterized in that** it comprises a steam outflow rate control system with which the gripping member (3, 103) may be immobilized in different angular control positions in the control range.

15. The gripping knob (1, 101) according to claim 14, **characterized in that** the steam outflow rate control system is formed by a strip (17) borne in a radially flexible way by one (3, 103) of the two components between the gripping member (3, 103) and the base (2, 102) and a series of nicks (18) borne by the other component (2, 102) so as to define as many angular control positions by a detent action.

16. The gripping knob (1, 101) according to claim 15, **characterized in that** the strip (17) is borne by the base (2, 102), the nicks (18) being made in the gripping member (3).

17. A cooking vessel lid comprising a cover adapted so as to cover the cooking vessel and a gripping knob (1, 101) attached to the cover, **characterized in that** the gripping knob (1, 101) is in accordance with any of claims 1 to 16.

## Patentansprüche

1. Griffknopf (1, 101) mit einerseits einem Sockel (2, 102), der zur Befestigung an einer Abdeckhaube für Kochartikel und zum Begrenzen eines Dampfablasskanals mit der Haube angepasst ist, und andererseits mit einer Griffeinrichtung (3, 103), die gemäß einer Rotationsachse (4) drehbar um den Sockel (2, 102) herum in einem Winkelbereich der Dampfsteuerung montiert ist, der durch zwei Extremwinkelsteuerstellungen begrenzt ist, um so den Austritt des Ablasskanals abhängig von seiner Winkellage in diesem Bereich versperren zu können,
**dadurch gekennzeichnet, dass** der Sockel (2, 102) und die Griffeinrichtung (3, 103) zugeordnete Befestigungsmittel aufweisen, die ihre Befestigung aneinander durch ihre relative axiale Annäherung erlauben.

2. Griffknopf (1, 100) gemäß Anspruch 1, **dadurch gekennzeichnet, dass** der Sockel (2, 102) die allgemeine Form einer Scheibe mit einem zu der Oberseite gewölbten Winkelsektor (5) hat, der dazu angepasst ist, den Dampfablasskanal zu begrenzen.

3. Griffknopf (1, 100) gemäß Anspruch 2, **dadurch gekennzeichnet, dass** die Griffeinrichtung (3, 103) eine den Sockel (2, 102) umgebende Umfangswand (6, 106) umfasst, die dazu angepasst ist, den Austritt des Ablasskanals zu versperren, und eine Ablassöffnung (7) aufweist, die sich auf einen Winkelsektor entsprechend dem gewölbten Winkelsektor (5) des Sockels (2, 102) erstreckt.

4. Griffknopf (1) gemäß einem der Ansprüche 1 bis 3, **dadurch gekennzeichnet, dass** die Griffeinrichtung (3) an dem Sockel (2) durch ein Bajonettsystem fest verbunden ist, das von dem Sockel (2) und der Griffeinrichtung (3) getragen wird.

5. Griffknopf (1) gemäß Anspruch 4, **dadurch gekennzeichnet, dass** das System der Bajonettverbindung mindestens zwei Nocken (8a, 8b, 8c) umfasst, die von mindestens einem (3) der zwei Teile bestehend aus der Griffeinrichtung (3) und dem Sockel (2) getragen werden, und ebenso viele Aussparungen (9a, 9b, 9c) in einer Umfangsschulter (10) vorhanden sind, die von dem anderen Teil (2) getragen wird, wodurch das axiale Gleiten der Griffeinrichtung (3) im Bezug auf den Sockel (2) zwischen einer axialen Anbringstellung, die eine anfängliche Winkelstellung bestimmt, und einer axialen Gebrauchsstellung erlaubt wird, in der die Griffeinrichtung (3) von der einen zu der anderen der zwei Extremwinkelstellungen der Dampfsteuerung umschaltbar ist.

6. Griffknopf (1) gemäß Anspruch 5, in Abhängigkeit von Anspruch 3, **dadurch gekennzeichnet, dass** die Umfangsschulter (10) die Umfangsbegrenzung des Sockels (2) ausbildet, wobei die Nocken (8a, 8b, 8c) von der Umfangswand (6) der Griffeinrichtung (3), die die Umfangsschulter (10) umgibt, getragen werden.

7. Griffknopf (1) gemäß Anspruch 5 oder 6, in Abhängigkeit von Anspruch 3, **dadurch gekennzeichnet, dass** die Umfangswand (6) eine ringförmige Wand (11) trägt, die axial versetzt zu den Nocken (8a, 8b, 8c) um die Dicke der Umfangsschulter (10) des Sockels (2) ist und gegen die die letztere anliegt, wenn der Sockel (2) in seiner axialen Gebrauchsstellung ist.

8. Griffknopf (1) gemäß einem der Ansprüche 5 bis 7, **dadurch gekennzeichnet, dass** das System der Bajonettverbindung drei Nocken (8a, 8b, 8c) und drei Aussparungen (9a, 9b, 9c) aufweist.

9. Griffknopf (1) gemäß einem der Ansprüche 5 bis 8, **dadurch gekennzeichnet, dass** er ein Schließsystem der Verbindung der Griffeinrichtung mit dem Sockel (2) umfasst, das von dem Sockel (2) und der Griffeinrichtung (3) getragen wird, wodurch, wenn die Griffeinrichtung (3) in ihrer axialen Gebrauchsstellung ist, ihre Drehung aus ihrer anfänglichen axialen Stellung zum Winkelbereich der Steuerung erlaubt, und die gegenläufige Bewegung verhindert wird.

10. Griffknopf (1) gemäß Anspruch 9, **dadurch gekennzeichnet, dass** das Schließsystem einerseits einen Finger (8a), der von mindestens einem (3) der zwei Teile bestehend aus der Griffeinrichtung (3) und dem Sockel (2) getragen wird, und andererseits eine Zunge (13) aufweist, die von dem anderen Teil (2) axial flexibel getragen wird, wobei die Zunge (13) eine axial geneigte Ebene (14) aufweist, die dem Finger (8a) erlaubt, diese in einer Drehrichtung durch Einklinken zu überwinden, und eine radiale Seite (16), die eine der zwei Extremwinkelstellungen der Dampfsteuerung bestimmt, wenn der Finger (8a) in der anderen Drehrichtung zum Anliegen kommt.

11. Griffknopf (1) gemäß Anspruch 10, **dadurch gekennzeichnet, dass** der Finger (8a) durch einen der Nocken (8a, 8b, 8c) ausgebildet ist, wobei die entsprechende Aussparung (9a) durch die radiale Seite (15) der Zunge (13) begrenzt ist, die dieser (16), die eine der Extremwinkelstellungen bestimmt, entgegengesetzt ist.

12. Griffknopf (101) gemäß einem der Ansprüche 1 bis 3, **dadurch gekennzeichnet, dass** die Griffeinrichtung (103) mit dem Sockel (102) durch ein Einklinksystem fest verbunden ist, das von dem Sockel (102) und der Griffeinrichtung (103) getragen wird.

13. Griffknopf (101) gemäß Anspruch 12 in Abhängigkeit von Anspruch 3, **dadurch gekennzeichnet, dass** das Einklinksystem eine innere ringförmige Wand (140), die von der Umfangswand (106) getragen wird, und einen Nocken (141) aufweist, der von einer Lasche (142) getragen wird, die elastisch auf dem Sockel (102) montiert ist.

14. Griffknopf (1, 101) nach einem der Ansprüche 1 bis 13, **dadurch gekennzeichnet, dass** er ein Dampfdurchflusssteuerungssystem aufweist, das ein Blockieren der Griffeinrichtung (3, 103) in unterschiedlichen Winkelsteuerstellungen in dem Steuerbereich ermöglicht.

15. Griffknopf (1, 101) gemäß Anspruch 14, **dadurch gekennzeichnet, dass** das Dampfdurchflusssteuerungssystem durch einen Steg (17) ausgebildet ist, der so radial flexibel durch mindestens eines (3, 103) der zwei Teile bestehend aus der Griffeinrichtung (3, 103) und dem Sockel (2, 102) und eine von dem anderen Teil (2, 102) getragene Reihe von Einkerbungen (18), getragen wird, um ebenso viele Winkelsteuerstellungen durch Einklinken zu bestimmen.

16. Griffknopf (1, 101) gemäß Anspruch 15, **dadurch gekennzeichnet, dass** der Steg (17) von dem Sockel (2, 102) getragen wird, wobei die Einkerbungen (18) in der Griffeinrichtung (3) ausgebildet sind.

17. Kochartikelabdeckung mit einer Haube, die zum Abdecken von Kochartikeln angepasst ist, und einem an der Haube befestigten Griffknopf (1, 101), **dadurch gekennzeichnet, dass** der Griffknopf (1, 101) einem der Ansprüche 1 bis 16 entspricht.
